# EUROPEAN PATENT SPECIFICATION

(11) **EP 4 261 179 B1**
(45) Date of publication and mention of the grant of the patent: **04.06.2025**
(21) Application number: 21922057.1
(22) Date of filing: 31.03.2021
(51) Int. Cl.: B66F 9/075, B66F 17/00, B66F 9/065, B66F 9/24

(54) **FORKLIFT ANTI-TIPPING METHOD, APPARATUS THEREOF, AND FORKLIFT**
GABELSTAPLER-ANTIKIPPVERFAHREN, VORRICHTUNG DAFÜR UND GABELSTAPLER
PROCÉDÉ ANTI-BASCULEMENT DE LÈVE-PALETTE, APPAREIL ASSOCIÉ, ET LÈVE-PALETTE

(30) Priority: 27.01.2021 CN 202110111761
(43) Date of publication of application: 18.10.2023
(73) Proprietor: Sany Marine Heavy Industry Co., Ltd., Zhuhai, Guangdong 519090 (CN)
(72) Inventor: LIANG, Shuang, Zhuhai, Guangdong 519090 (CN)
(74) Representative: Murgitroyd & Company
(86) International application number: PCT/CN2021/084592
(87) International publication number: WO 2022/160458

(56) References cited:
- CN-A- 103 964 311
- CN-A- 108 152 053
- CN-A- 112 249 980
- CN-U- 202 220 069
- DE-A1- 102004 028 053
- DE-A1- 102020 206 550
- US-B1- 6 385 518
- US-B2- 9 002 557
- SUN BAOZHANG: "A Simple Method to Determine the Position of the Center of Gravity of Vehicles", SPECIAL PURPOSE VEHICLE, no. 1, 1 March 1988 (1988-03-01), pages 33 - 33+65, XP055953868, ISSN: 1004-0226

## Description

### TECHNICAL FIELD

The present application relates to the field of forklift technologies, and in particular, to a forklift overturning prevention method, a forklift overturning prevention apparatus, and a forklift.

### BACKGROUND

Loading and unloading of goods by a forklift is a common means of transportation. However, the forklift is prone to overturning due to a mechanical structure of the forklift and a carrying method. According to a forklift overturning prevention method in the prior art, only overturning in the front and rear directions is detected and prevented, ignoring the more dangerous left and right lateral overturning. Therefore, there is a need for a forklift overturning prevention method, which may detect a status of stability of the forklift in all directions in real time and prevent overturning of the forklift in all directions.

US6385518B1 discloses the subject-matter described in the preamble of claim 1.

### SUMMARY

In view of this, possible implementations of the present application provide a forklift overturning prevention method, a forklift overturning prevention apparatus, and a forklift, to solve a technical problem in the prior art that left and right lateral overturning of a forklift cannot be effectively prevented.

According to an aspect of the present application, a forklift overturning prevention method is provided in a possible implementation of the present application, including: acquiring a wheel load on a wheel of a forklift; obtaining a center of gravity of the forklift based on wheel loads on all wheels of the forklift; and sending a protection operation instruction when the center of gravity reaches a preset boundary line, wherein the obtaining a center of gravity of the forklift based on wheel loads on all wheels of the forklift includes: acquiring wheel load information values for four wheels respectively based on wheel loads on the four wheels of the forklift; and obtaining the center of gravity of the forklift based on weights of the four wheels and the wheel load information values for the four wheels, wherein the weights of the four wheels are preset based on positions of the four wheels; or when a sum of wheel loads on two wheels located on a first side is less than or equal to a first preset value, determining that the center of gravity is located on a preset boundary line on a second side, wherein the first side and the second side are opposite sides of the four wheels of the forklift.

In a possible implementation, the acquiring a wheel load on a wheel of a forklift includes: acquiring strain data for an axle housing of a steering axle, where the steering axle is configured to connect a drive shaft of the forklift and the wheel of the forklift; and converting the strain data into the wheel load, where the larger the strain data, the greater the wheel load.

In a possible implementation, the acquiring a wheel load on a wheel of a forklift includes: acquiring an axial pressure on a steering knuckle shaft of the forklift; and converting the axial pressure into the wheel load, where the greater the axial pressure, the greater the wheel load.

In a possible implementation, the preset boundary line includes a combination of one or more of the following: a connection line of two front tyres, a connection line of two rear tyres, a connection line of two left tyres, and a connection line of two right tyres.

In a possible implementation, the sending a protection operation instruction when the center of gravity reaches a preset boundary line includes: when the center of gravity reaches the connection line of the two front tyres, sending a protection operation instruction corresponding to forward overturning of the forklift.

In a possible implementation, the sending a protection operation instruction when the center of gravity reaches a preset boundary line includes: when the center of gravity reaches the connection line of the two rear tyres, sending a protection operation instruction corresponding to backward overturning of the forklift.

In a possible implementation, the sending a protection operation instruction when the center of gravity reaches a preset boundary line includes: when the center of gravity reaches the connection line of the two left tyres, sending a protection operation instruction corresponding to leftward overturning of the forklift; or when the center of gravity reaches the connection line of the two right tyres, sending a protection operation instruction corresponding to rightward overturning of the forklift.

In a possible implementation, the protection operation instruction includes: performing playback of a warning voice for forklift forward overturning, an operation of prohibiting a forklift boom from extension, and an operation of retracting a forklift boom; or performing playback of a warning voice for forklift backward overturning, an operation of prohibiting a forklift boom from retraction, and an operation of extending a forklift boom; or performing playback of a warning voice for forklift leftward overturning, a stopping operation of a forklift boom, and an increase in right counterweight torque; or performing playback of a warning voice for forklift rightward overturning, a stopping operation of a forklift boom, and an increase in left counterweight torque.

According to another aspect of the present application, a forklift overturning prevention apparatus is provided, including: a wheel load acquisition module, configured to acquire a wheel load on a wheel of a forklift; a center of gravity calculation module, configured to obtain a center of gravity of the forklift based on wheel loads on all wheels of the forklift; and a determining module, configured to send a protection operation instruction when the center of gravity reaches a preset boundary line.

In a possible implementation, the wheel load acquisition module includes: a first acquisition submodule, configured to acquire strain data for an axle housing of a steering axle, where the steering axle is configured to connect a drive shaft of the forklift and the wheel of the forklift; and a first conversion submodule, configured to convert the strain data into the wheel load, where the larger the strain data, the greater the wheel load.

In a possible implementation, the wheel load acquisition module includes: a second acquisition submodule, configured to acquire an axial pressure on a steering knuckle shaft of the forklift; and a second conversion submodule, configured to convert the axial pressure into the wheel load, where the greater the axial pressure, the greater the wheel load.

In a possible implementation, the center of gravity calculation module includes: a wheel load information value acquisition submodule, configured to acquire wheel load information values for four wheels respectively based on wheel loads on the four wheels of the forklift; and a first center of gravity calculation submodule, configured to determine the center of gravity based on the wheel load information values for the four wheels, where a position of the center of gravity is shifted to a position of a wheel corresponding to a larger wheel load information value.

In a possible implementation, the first center of gravity calculation submodule includes: a first line of center of gravity acquisition unit, configured to acquire, based on wheel load information values for two wheels of the four wheels, a first line of center of gravity perpendicular to a connection line of the two wheels, where a ratio of distances from the two wheels to the first line of center of gravity is corresponding to a ratio of the wheel load information values for the two wheels; a second line of center of gravity acquisition unit, configured to acquire, based on wheel load information values for the other two wheels of the four wheels, a second line of center of gravity perpendicular to a connection line of the other two wheels, where a ratio of distances from the other two wheels to the second line of center of gravity is corresponding to a ratio of the wheel load information values for the other two wheels; and an intersection point acquisition unit, configured to determine an intersection point of the first line of center of gravity and the second line of center of gravity as the center of gravity.

In a possible implementation, the center of gravity calculation module includes: a wheel load information value acquisition submodule, configured to acquire wheel load information values for four wheels respectively based on wheel loads on the four wheels of the forklift; and a second center of gravity calculation submodule, configured to obtain the center of gravity of the forklift based on weights of the four wheels and the wheel load information values for the four wheels, where the weights of the four wheels are preset based on positions of the four wheels.

In a possible implementation, the center of gravity calculation module includes: a determining subunit module, configured to: when a sum of wheel loads on two wheels located on a first side is less than or equal to a first preset value, determine that center of gravity is located on a preset boundary line on a second side, where the first side and the second side are opposite sides of the four wheels of the forklift.

In a possible implementation, the preset boundary line includes a combination of one or more of the following: a connection line of two front tyres, a connection line of two rear tyres, a connection line of two left tyres, and a connection line of two right tyres.

In a possible implementation, the determining module is configured to: when the center of gravity reaches the connection line of the two front tyres, send a protection operation instruction corresponding to forward overturning of the forklift.

In a possible implementation, the determining module is configured to: when the center of gravity reaches the connection line of the two rear tyres, send a protection operation instruction corresponding to backward overturning of the forklift.

In a possible implementation, the determining module is configured to: when the center of gravity reaches the connection line of the two left tyres, send a protection operation instruction corresponding to leftward overturning of the forklift.

In a possible implementation, the determining module is configured to: when the center of gravity reaches the connection line of the two right tyres, send a protection operation instruction corresponding to rightward overturning of the forklift.

In a possible implementation, the protection operation instruction includes: performing playback of a warning voice for forklift forward overturning, an operation of prohibiting a forklift boom from extension, and an operation of retracting a forklift boom; or performing playback of a warning voice for forklift backward overturning, an operation of prohibiting a forklift boom from retraction, and an operation of extending a forklift boom; or performing playback of a warning voice for forklift leftward overturning, a stopping operation of a forklift boom, and an increase in right counterweight torque; or performing playback of a warning voice for forklift rightward overturning, a stopping operation of a forklift boom, and an increase in left counterweight torque.

According to still another aspect of the present application, a possible implementation of the present application provides a forklift, including: a forklift body for handling a material; a forklift overturning prevention apparatus disposed on the forklift body, configured to perform the forklift overturning prevention method according to any one of the foregoing aspects; and a controller disposed on the forklift body and electrically connected to the forklift overturning prevention apparatus, configured to control the forklift body to perform a protection operation when a protection operation instruction sent by the forklift overturning prevention apparatus is received.

According to still another aspect of the present application, a possible implementation of the present application provides an electronic device, including: a processor; a memory; and computer program instructions stored in the memory, where when the computer program instructions are run by the processor, the processor is configured to implement the forklift overturning prevention method according to any one of the foregoing aspects.

According to still another aspect of the present application, a possible implementation of the present application provides a computer-readable storage medium, where the computer-readable storage medium stores computer program instructions, and when the computer program instructions are run by a processor, the processor is configured to implement the forklift overturning prevention method according to any one of the foregoing aspects.

According to the forklift overturning prevention method in the possible implementation of the present application, a wheel load on a wheel is directly acquired, a center of gravity of a forklift is acquired in real time, and when the center of gravity reaches a preset boundary line, a protection operation instruction is sent, so that the forklift stops working and sounds an alarm to prevent the forklift from overturning. Compared with the prior art, directly acquiring a wheel load on a wheel may eliminate interference of another factor and a status of the center of gravity of the forklift may be determined directly and accurately. The center of gravity of the forklift is acquired in real time, so that no matter from which position the center of gravity reaches the preset boundary line, a protection operation instruction is sent to ensure that the forklift is in a stable state in all directions, thereby preventing the forklift from overturning in different directions, in particular preventing the forklift from more dangerous left and right lateral overturning, and effectively guaranteeing safety of goods and personnel.

### BRIEF DESCRIPTION OF THE DRAWINGS

FIG. 1 is a schematic flowchart of a forklift overturning prevention method according to a possible implementation of the present application.
FIG. 2 is a schematic flowchart of acquiring a wheel load on a wheel of a forklift in a forklift overturning prevention method according to a possible implementation of the present application.
FIG. 3 is a schematic flowchart of acquiring a wheel load on a wheel of a forklift in a forklift overturning prevention method according to another possible implementation of the present application.
FIG. 4 is a schematic flowchart of obtaining a center of gravity of a forklift in a forklift overturning prevention method according to a possible implementation of the present application.
FIG. 5 is a schematic flowchart of obtaining a center of gravity of a forklift in a forklift overturning prevention method according to another possible implementation of the present application.
FIG. 6 is a schematic flowchart of obtaining a center of gravity of a forklift in a forklift overturning prevention method according to another possible implementation of the present application.
FIG. 7 is a schematic flowchart of obtaining a center of gravity of a forklift in a forklift overturning prevention method according to another possible implementation of the present application.
FIG. 8 is a schematic diagram of wheel distribution of a forklift according to a possible implementation of the present application.
FIG. 9 is a schematic structural diagram of a forklift overturning prevention apparatus according to a possible implementation of the present application.
FIG. 10 is a schematic structural diagram of a forklift overturning prevention apparatus according to a possible implementation of the present application.
FIG. 11 is a schematic structural diagram of an electronic device according to a possible implementation of the present application.

### DETAILED DESCRIPTIONS OF THE EMBODIMENTS

As described in Background, there is a technical problem in a conventional technology that left and right lateral overturning of the forklift cannot be effectively prevented. The inventor has found that reasons for this problem are as follows. When a forklift performs an operation such as horizontal handling, stacking, picking, loading, and unloading, goods are placed at the front end of the forklift. Therefore, forward overturning caused by braking is more easily concerned, but leftward and rightward overturning of the forklift is often more dangerous and easily ignored. Due to neglect of problems and limitations of technologies, in the prior art, left and right lateral overturning of the forklift cannot be effectively prevented, and the more dangerous left and right lateral overturning is ignored.

In view of the foregoing technical problems, the basic concept of the present application is to provide a forklift overturning prevention method, in which a wheel load on a wheel is directly acquired, a center of gravity of a forklift is acquired in real time, and when the center of gravity reaches a preset boundary line, a protection operation instruction is sent, so that the forklift stops working and sounds an alarm to prevent the forklift from overturning. Compared with the prior art, directly acquiring a wheel load on a wheel may eliminate interference of another factor and a status of the center of gravity of the forklift may be determined directly and accurately. The center of gravity of the forklift is acquired in real time, so that no matter from which position the center of gravity reaches a preset boundary line, a protection operation instruction is sent to ensure that the forklift is in a stable state in all directions, thereby preventing the forklift from overturning in different directions, in particular preventing the forklift from more dangerous left and right lateral overturning, and effectively guaranteeing safety of goods and personnel.

The following clearly and completely describes the technical solutions in the embodiments of the present application with reference to the accompanying drawings in the embodiments of the present application. Apparently, the described embodiments are merely some but not all of the embodiments of the present application. All other embodiments obtained by a person of ordinary skill in the art based on the embodiments of the present application without creative efforts fall within the protection scope of the present application.

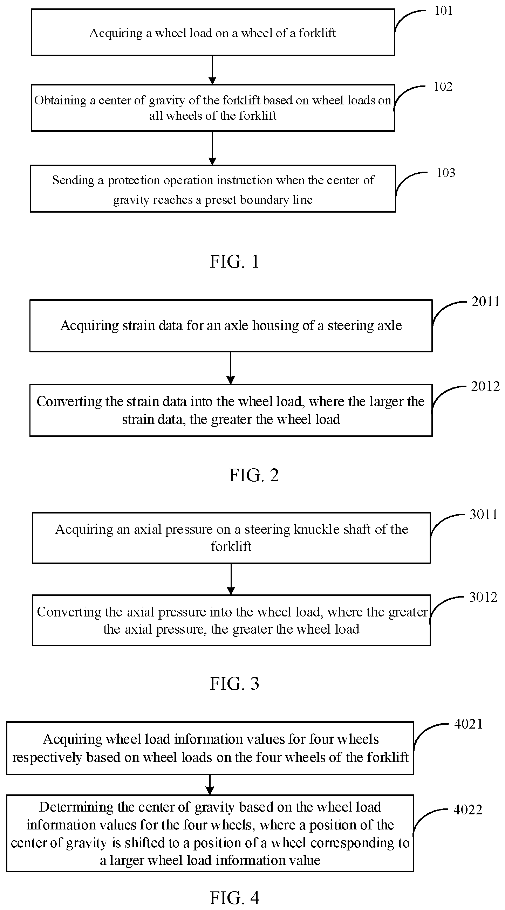

FIG. 1 is a schematic flowchart of a forklift overturning prevention method according to a possible implementation of the present application. As shown in FIG. 1, the forklift overturning prevention method includes the following steps.

Step 101: acquiring a wheel load on a wheel of a forklift.

Specifically, the wheel load on a wheel is pressure of the wheel acting on a ground. Directly acquiring the wheel load on the wheel may eliminate interference of other factors such as oil pressure fluctuations in a weighing process, deflection of boom deformation, and load eccentricity, so as to directly obtain accurate data. A manner for acquiring the wheel load on the wheel is not specifically limited in this implementation. In comparison with acquiring another parameter representing a condition of the wheel, acquiring the wheel load may reduce interference of other factors such as the oil pressure fluctuations in a weighing process, the deflection of boom deformation, and the load eccentricity.

Step 102: obtaining a center of gravity of the forklift based on wheel loads on all wheels of the forklift.

Specifically, considering an impact of the wheel loads on all wheels of the forklift, the center of gravity of the forklift is obtained comprehensively, and a direction to which the position of the center of gravity is close indicates a direction at which the forklift is at risk of overturning.

Step 103: sending a protection operation instruction when the center of gravity reaches a preset boundary line.

Specifically, a position of the center of gravity of a current forklift is calculated in real time. Once the center of gravity of the forklift approaches the preset boundary line, it is determined that the forklift is in a danger of overturning, and the protection operation instruction is immediately sent, so that the forklift performs a protection operation to prevent the forklift from overturning.

In this implementation, the wheel load on the wheel is directly acquired, the center of gravity of the forklift is acquired in real time, and when the center of gravity reaches the preset boundary line, a protection operation instruction is sent, so that the forklift stops working and sounds an alarm to prevent the forklift from overturning. Compared with the prior art, directly acquiring the wheel load on the wheel may eliminate interference of another factor and a status of the center of gravity of the forklift may be determined directly and accurately. The center of gravity of the forklift is acquired in real time, so that no matter from which position the center of gravity reaches the preset boundary line, a protection operation instruction is sent to ensure that the forklift is in a stable state in all directions, thereby preventing the forklift from overturning in all directions, in particular preventing the forklift from more dangerous left and right lateral overturning, and effectively guaranteeing safety of goods and personnel.

FIG. 2 is a schematic flowchart of acquiring a wheel load on a wheel of a forklift in a forklift overturning prevention method according to a possible implementation of the present application. As shown in FIG. 2, the acquiring a wheel load on a wheel of a forklift includes the following steps.

Step 2011: acquiring strain data for an axle housing of a steering axle.

Specifically, the steering axle is configured to connect a drive shaft of the forklift and a wheel of the forklift. When the wheel is pressed during transportation of the forklift, a stress deformation is generated on the axle housing. The strain data for the axle housing may reflect an axle load on the steering axle, and the axle load on the steering axle may reflect the wheel load on the wheel. The strain data is data for deformation of the axle housing due to the stress deformation. The strain data for the axle housing of the steering axle may be collected by means of a strain sensor, and the strain sensor is disposed at a position, close to a tyre, on the axle housing of the steering axle.

Step 2012: converting the strain data into the wheel load, where the larger the strain data, the greater the wheel load.

Specifically, the larger the strain data, the greater the wheel load. When the strain data is converted into the wheel load, a size of the wheel load may be accurately reflected. Optionally, the relationship between the strain data and the wheel load is a proportional linear change.

FIG. 3 is a schematic flowchart of acquiring a wheel load on a wheel of a forklift in a forklift overturning prevention method according to another possible implementation of the present application. As shown in FIG. 3, the acquiring a wheel load on a wheel of a forklift includes the following steps.

Step 3011: acquiring an axial pressure on a steering knuckle shaft of the forklift.

Specifically, when the wheel is pressed during transportation of the forklift, the axial pressure is generated on the steering knuckle shaft of the forklift, and the pressure on the steering knuckle shaft may reflect the wheel load on the wheel. The pressure on the steering knuckle shaft may be collected by a pressure sensor disposed on the steering knuckle shaft.

Step 3012: converting the axial pressure into the wheel load, where the greater the axial pressure, the greater the wheel load.

Optionally, the relationship between the axial pressure and the wheel load is a proportional linear change.

Specifically, the larger the axial pressure, the greater the wheel load. When the axial pressure is converted into the wheel load, a size of the wheel load may be accurately reflected.

In the foregoing two possible implementations, the wheel load on the wheel is acquired in real time through conversion, interference of another factor may be eliminated, and a status of the center of gravity of the forklift may be determined more directly and accurately.

FIG. 4 is a schematic flowchart of obtaining a center of gravity of a forklift in a forklift overturning prevention method according to a possible implementation of the present application. As shown in FIG. 4, the obtaining a center of gravity of the forklift based on wheel loads on all wheels of the forklift includes the following steps.

Step 4021: acquiring wheel load information values for four wheels respectively based on wheel loads on the four wheels of the forklift.

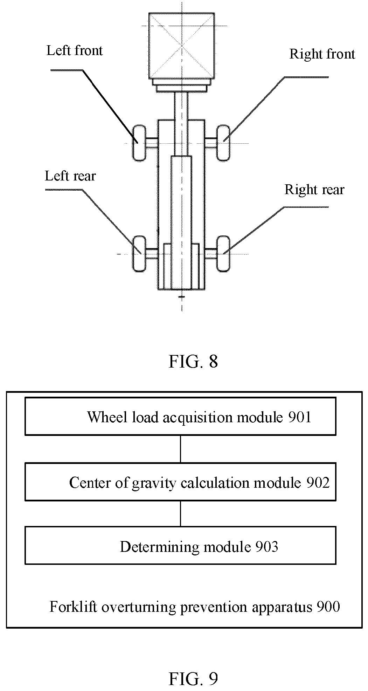

Specifically, a wheel distribution of the forklift may be as shown in FIG. 8. (FIG. 8 is a schematic diagram of wheel distribution of a forklift according to a possible implementation of the present application.) The wheel load information values are proportional values obtained based on wheel load pressure values of the four wheels, and a specific calculation method may be calculating a ratio of a wheel load on a specific wheel to a sum of the wheel loads on four wheels of the forklift. A wheel load on a left front wheel, a wheel load on a left rear wheel, a wheel load on a right front wheel, and a wheel load on a right rear wheel are separately acquired, and a left front wheel load information value, a left rear wheel load information value, a right front wheel load information value, and a right rear wheel load information value are separately acquired. For example, the wheel load on the left front wheel, the wheel load on the left rear wheel, the wheel load on the right front wheel, and the wheel load on the right rear wheel are 12 KN, 25 KN, 18 KN and 15 KN, respectively, and the left front wheel load information value, the left rear wheel load information value, the right front wheel load information value, and the right rear wheel load information value are 17.14%, 35.71%, 25.71%, and 21.44%, respectively.

Step 4022: determining the center of gravity based on the wheel load information values for the four wheels, where a position of the center of gravity is shifted to a position of a wheel corresponding to a larger wheel load information value.

Specifically, the larger wheel load information value indicates a larger wheel load on a corresponding wheel, and the position of the center of gravity shifts towards a direction of the corresponding wheel. The position of the center of gravity is shifted to the position of the wheel corresponding to the larger wheel load information value, so as to obtain the center of gravity in real time. For example, the left front wheel load information value, the left rear wheel load information value, the right front wheel load information value, and the right rear wheel load information value are 17.14%, 35.71%, 25.71%, and 21.44%, respectively, where the left rear wheel load information value is larger, so that the center of gravity of the forklift should be shifted to the position of the rear left wheel.

In this implementation, the wheel load information values for the four wheels are acquired, and the center of gravity is shifted towards the direction corresponding to the larger wheel load information value, so that the center of gravity of the forklift is determined, thereby conveniently and quickly acquiring the position of the center of gravity.

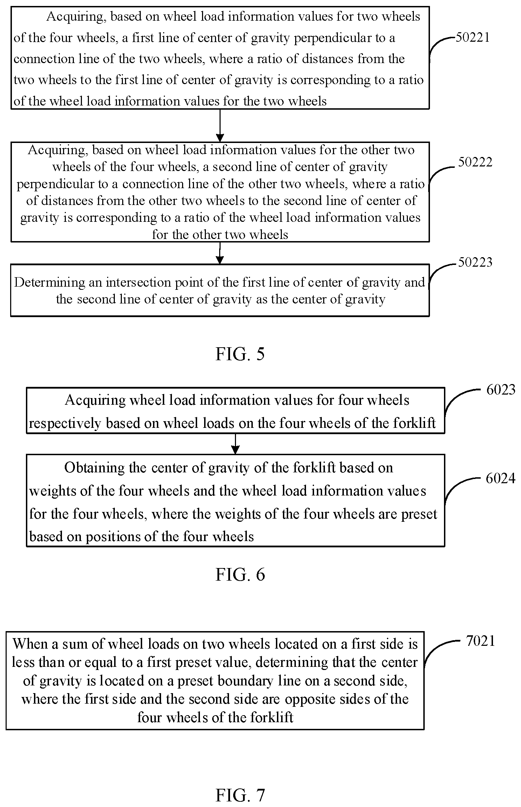

FIG. 5 is a schematic flowchart of obtaining a center of gravity of a forklift in a forklift overturning prevention method according to another possible implementation of the present application. As shown in FIG. 5, the determining the center of gravity based on the wheel load information values for the four wheels includes the following steps.

Step 50221: acquiring, based on wheel load information values for two wheels of the four wheels, a first line of center of gravity perpendicular to a connection line of the two wheels, where a ratio of distances from the two wheels to the first line of center of gravity is corresponding to a ratio of the wheel load information values for the two wheels.

Specifically, the two wheels are first selected from the four wheels. The two wheels may be two wheels on the left side, two wheels on the right side, or two wheels on one of two diagonals formed by the four wheels. How to select the two wheels from the four wheels is not specifically limited in the possible implementation. For example, the left front wheel load information value, the left rear wheel load information value, the right front wheel load information value, and the right rear wheel load information value are 17.14%, 35.71%, 25.71%, and 21.44%, respectively. Front and rear wheels on the left side are selected, and wheel load information values thereof are 17.14% and 35.71%, respectively. A vertical line perpendicular to a connection line segment of the two wheels on the left side is formed, the vertical line divides the connection line segment of the two wheels on the left side into two segments, and a ratio of the two segments is the same as the ratio of 17.14% to 35.71%.

Step 50222: acquiring, based on wheel load information values for the other two wheels of the four wheels, a second line of center of gravity perpendicular to a connection line of the other two wheels, where a ratio of distances from the other two wheels to the second line of center of gravity is corresponding to a ratio of the wheel load information values for the other two wheels.

Specifically, the second line of center of gravity is acquired by using a method same as that used for the first line of center of gravity. For example, front and rear wheels on the right side are selected, and wheel load information values for the front and rear wheels on the right side are 25.71% and 21.44%, respectively. A vertical line perpendicular to a connection line segment of the two wheels on the right side is formed, the vertical line divides the connection line segment of the two wheels on the right side into two segments, and a ratio of the two segments is the same as the ratio of 25.71% to 21.44%.

Step 50223: determining an intersection point of the first line of center of gravity and the second line of center of gravity as the center of gravity.

In this implementation, a direction in which the center of gravity is shifted in a first direction is determined based on wheel load information values for the two wheels of the four wheels, a direction in which the center of gravity is shifted in a second direction is determined based on wheel load information values for the other two wheels, and a direction in which the center of gravity is shifted is obtained in combination with the two directions, thereby determining the center of gravity.

FIG. 6 is a schematic flowchart of obtaining a center of gravity of a forklift in a forklift overturning prevention method according to the present application. As shown in FIG. 6, the obtaining a center of gravity of the forklift based on wheel loads on all wheels of the forklift includes the following steps.

Step 6023: acquiring wheel load information values for four wheels respectively based on wheel loads on the four wheels of the forklift.

Specifically, the wheel load information values are initial wheel load information values acquired based on the wheel loads on the four wheels.

Step 6024: obtaining the center of gravity of the forklift based on weights of the four wheels and the wheel load information values for the four wheels, where the weights of the four wheels are preset based on positions of the four wheels.

Specifically, considering different working environments of the forklift, importance may be attached to different directions of overturning of the forklift. For example, when the forklift is used at a sea-land junction, more importance is attached to overturning of the forklift towards the sea side, thus requiring an increase in weight on one side. The weights of the four wheels are preset according to different application scenarios.

Calculation is performed again based on the weights of the four wheels and the wheel load information values for the four wheels acquired in Step 6023, to obtain updated wheel load information values. The center of gravity of the forklift is further determined based on the updated wheel load information values.

The method of further determining the center of gravity of the forklift based on the updated wheel load information values is the same as the method described in Step 50221, Step 50222, and Step 50223. For example, since front and rear wheels on the left side are located on the seaside, weights of the front and rear wheels on the left side are larger. A weight of the left front wheel, a weight of the left rear wheel, a weight of the right front wheel, and a weight of the right rear wheel are 0.35, 0.3, 0.15, and 0.2, respectively, and the wheel load information values for the front and rear wheels on the left side are 17.14% and 35.71%, respectively. When the first line of center of gravity is determined, a vertical line perpendicular to a connection line segment of the two wheels on the left side is formed, the vertical line divides the connection line segment of the two wheels on the left side into two segments, and a ratio of the two segments is the same as the ratio of 17.14%*0.35 to 35.71%*0.3.

In this implementation, considering different application scenarios of the forklift, significant importance is attached to overturning of the forklift on one side. Weight of this side is increased, and a magnitude of shift of the center of gravity toward the direction is increased, so that the center of gravity is easier to approach a preset boundary line in the direction, thereby reducing a probability of overturning on the side.

FIG. 7 is a schematic flowchart of obtaining a center of gravity of a forklift in a forklift overturning prevention method according to the present application. As shown in FIG. 7, the obtaining a center of gravity of the forklift based on wheel loads on all wheels of the forklift includes the following steps.

Step 7021: when a sum of wheel loads on two wheels located on a first side is less than or equal to a first preset value, determining that the center of gravity is located on a preset boundary line on a second side, where the first side and the second side are opposite sides of the four wheels of the forklift.

Specifically, when the sum of the wheel loads on the two wheels on the first side is less than or equal to the first preset value, it is considered that the two wheels on the first side are not subjected to pressure, and the center of gravity of the forklift is located on the preset boundary line on the second side opposite to the first side.

For example, a wheel distribution of the forklift may be as shown in FIG. 8. The wheel load on the left front wheel, the wheel load on the left rear wheel, the wheel load on the right front wheel, and the wheel load on the right rear wheel are respectively acquired.

When a sum of the wheel load on the left front wheel and the wheel load on the left rear wheel is less than or equal to the first preset value, it is indicated that the center of gravity is located at the preset boundary line on the right side, and it is determined that the forklift is in danger of rightward overturning, and thus the forklift performs a protection measure. Optionally, the preset boundary line may be a connection line of two tyres on the right side.

When a sum of the wheel load on the right front wheel and the wheel load on the right rear wheel is less than or equal to the first preset value, it is indicated that the center of gravity is located at the preset boundary line on the left side, and it is determined that the forklift is in danger of leftward overturning, and thus the forklift performs a protection measure. Optionally, the preset boundary line may be a connection line of two tyres on the left side.

When a sum of the wheel load on the right front wheel and the wheel load on the left front wheel is less than or equal to the first preset value, it is indicated that the center of gravity is located at the preset boundary line on the back side, and it is determined that the forklift is in danger of backward overturning, and thus the forklift performs a protection measure. Optionally, the preset boundary line may be a connection line of two tyres on the back side.

When a sum of the wheel load on the right rear wheel and the wheel load on the left rear wheel is less than or equal to the first preset value, it is indicated that the center of gravity is located at the preset boundary line on the front side, and it is determined that the forklift is in danger of forward overturning, and thus the forklift performs a protection measure. Optionally, the preset boundary line may be a connection line of two tyres on the front side.

It should be understood that the first preset value may be 0 N, 10 N, 50 N, 100 N, 200 N, or the like, and the first preset value is set according to a type of the forklift and a specific application scenario.

In this possible implementation, when it is determined that the sum of wheel loads on the two wheels located on a first side is less than or equal to the first preset value, it is considered that the two wheels located on the first side are not subjected to pressure. Thus, it is determined that the center of gravity is located on a preset boundary line on a second side opposite to the first side, and then it is determined that there is a potential risk of overturning of the forklift in the direction of the second side, so that a protection measure is performed to prevent the forklift from overturning.

In a possible implementation, the preset boundary line includes a combination of one or more of the following: a connection line of two front tyres, a connection line of two rear tyres, a connection line of two left tyres, and a connection line of two right tyres.

The sending a protection operation instruction when the center of gravity reaches a preset boundary line includes the following operations: when the center of gravity reaches the connection line of the two front tyres, sending a protection operation instruction corresponding to forward overturning of the forklift; when the center of gravity reaches the connection line of the two rear tyres, sending a protection operation instruction corresponding to backward overturning of the forklift; when the center of gravity reaches the connection line of the two left tyres, sending a protection operation instruction corresponding to leftward overturning of the forklift; and when the center of gravity reaches the connection line of the two right tyres, sending a protection operation instruction corresponding to rightward overturning of the forklift.

Specifically, the preset boundary line is the connection line of the two front tyres, and when the center of gravity reaches the connection line of the two front tyres, the protection operation instruction corresponding to forward overturning of the forklift is sent, so that the forklift performs a protection operation to prevent the forklift from forward overturning. The preset boundary line is the connection line of the two rear tyres, and when the center of gravity reaches the connection line of the two rear tyres, the protection operation instruction corresponding to backward overturning of the forklift is sent, so that the forklift performs a protection operation to prevent the forklift from backward overturning. The preset boundary line is the connection line of the two left tyres, and when the center of gravity reaches the connection line of the two left tyres, the protection operation instruction corresponding to backward overturning of the forklift is sent, so that the forklift performs a protection operation to prevent the forklift from leftward overturning. The preset boundary line is the connection line of the two right tyres, and when the center of gravity reaches the connection line of the two right tyres, the protection operation instruction corresponding to rightward overturning of the forklift is sent, so that the forklift performs a protection operation to prevent the forklift from rightward overturning.

In a possible implementation, protection operation instructions include: performing playback of a warning voice for forklift forward overturning, an operation of prohibiting a forklift boom from extension, and an operation of retracting a forklift boom; performing playback of a warning voice for forklift backward overturning, an operation of prohibiting a forklift boom from retraction, and an operation of extending a forklift boom; performing playback of a warning voice for forklift leftward overturning, a stopping operation of a forklift boom, and an increase in right counterweight torque; and performing playback of a warning voice for forklift rightward overturning, a stopping operation of a forklift boom, and an increase in left counterweight torque.

Specifically, when the center of gravity reaches the connection line of the two front tyres, the warning voice for forklift forward overturning is played back, and the operation of prohibiting the forklift boom from extension and the operation of retracting the forklift boom are performed, so that the center of gravity is adjusted backwards to prevent the forklift from forward overturning. When the center of gravity returns to a safe position, the foregoing protection operation is stopped. When the center of gravity reaches the connection line of the two rear tyres, the warning voice for forklift backward overturning is played back, and the operation of prohibiting the forklift boom from retraction, and the operation of extending the forklift boom are performed, so that the center of gravity is adjusted forwards to prevent the forklift from backward overturning. When the center of gravity returns to the safe position, the foregoing protection operation is stopped.

When the center of gravity reaches the connection line of the two left tyres, the warning voice for forklift leftward overturning is played back, and operation of the forklift boom is stopped and right counterweight torque increases, so that the center of gravity is adjusted rightwards to prevent the forklift from leftward overturning. When the center of gravity returns to a safe position, the foregoing protection operation is stopped. When the center of gravity reaches the connection line of the two left tyres, the warning voice for forklift rightward overturning is played back, and the operation of the forklift boom is stopped and left counterweight torque increases, so that the center of gravity is adjusted leftwards to prevent the forklift from rightward overturning. When the center of gravity returns to a safe position, the foregoing protection operation is stopped.

In this possible implementation, when the center of gravity of the forklift reaches the preset boundary line, it is determined that the forklift is in danger of overturning, and the voice alarm is played to keep staff away from the forklift, thereby ensuring safety of the staff. In addition, protection operations corresponding to different overturning directions are performed to change a position of the center of gravity of the forklift, and reduce a probability that the center of gravity continues to shift toward the preset boundary line, thereby making the forklift as stable as possible, and reducing an overturning probability.

FIG. 9 is a schematic structural diagram of a forklift overturning prevention apparatus according to a possible implementation of the present application. As shown in FIG. 9, the forklift overturning prevention apparatus 900 includes: a wheel load acquisition module 901, configured to acquire a wheel load on a wheel of a forklift; a center of gravity calculation module 902, configured to obtain a center of gravity of the forklift based on wheel loads on all wheels of the forklift; and a determining module 903, configured to send a protection operation instruction when the center of gravity reaches a preset boundary line.

In this implementation, a wheel load on a wheel is directly acquired by using the wheel load acquisition module 901, a center of gravity of a forklift is acquired in real time by using the center of gravity calculation module 902, and it is determined by the determining module 903 that when the center of gravity reaches a preset boundary line, a protection operation instruction is sent, so that the forklift stops working and sounds an alarm to prevent the forklift from overturning. The forklift is ensured to be in a stable state in all directions, thereby preventing the forklift from overturning in all directions, in particular preventing the forklift from more dangerous left and right lateral overturning, and effectively guaranteeing safety of goods and personnel.

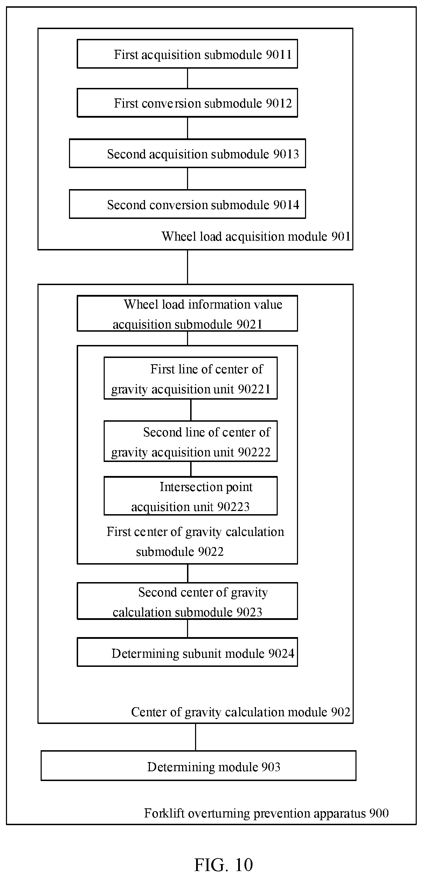

FIG. 10 is a schematic structural diagram of a forklift overturning prevention apparatus according to a possible implementation of the present application. As shown in FIG. 10, the wheel load acquisition module 901 further includes: a first acquisition submodule 9011, configured to acquire strain data for an axle housing of a steering axle; and a first conversion submodule 9012, configured to convert the strain data into the wheel load, where the larger the strain data, the greater the wheel load.

In a possible implementation, as shown in FIG. 10, the wheel load acquisition module 901 further includes: a second acquisition submodule 9013, configured to acquire an axial pressure on a steering knuckle shaft of the forklift; and a second conversion submodule 9014, configured to convert the axial pressure into the wheel load, where the greater the axial pressure, the greater the wheel load.

In a further possible implementation, the first acquisition submodule 9011 is disposed in the second acquisition submodule 9013, and the first conversion submodule 9012 is disposed in the second conversion submodule 9014.

In a possible implementation, as shown in FIG. 10, the center of gravity calculation module 902 further includes: a wheel load information value acquisition submodule 9021, configured to acquire wheel load information values for four wheels respectively based on wheel loads on the four wheels of the forklift; and a first center of gravity calculation submodule 9022, configured to determine the center of gravity based on the wheel load information values for the four wheels, where a position of the center of gravity is shifted to a position of a wheel corresponding to a larger wheel load information value.

In a possible implementation, as shown in FIG. 10, the first center of gravity calculation submodule 9022 further includes: a first line of center of gravity acquisition unit 90221, configured to acquire, based on wheel load information values for two wheels of the four wheels, a first line of center of gravity perpendicular to a connection line of the two wheels, where a ratio of distances from the two wheels to the first line of center of gravity is corresponding to a ratio of the wheel load information values for the two wheels; a second line of center of gravity acquisition unit 90222, configured to acquire, based on wheel load information values for the other two wheels of the four wheels, a second line of center of gravity perpendicular to a connection line of the other two wheels, where a ratio of distances from the other two wheels to the second line of center of gravity is corresponding to a ratio of the wheel load information values for the other two wheels; and an intersection point acquisition unit 90223, configured to determine an intersection point of the first line of center of gravity and the second line of center of gravity as the center of gravity.

In a possible implementation, as shown in FIG. 10, the center of gravity calculation module 902 further includes: a wheel load information value acquisition submodule 9021, configured to preset weights of the four wheels based on positions of the four wheels; and a second center of gravity calculation submodule 9023, configured to obtain the center of gravity of the forklift based on weights of the four wheels and the wheel load information values for the four wheels, where the weights of the four wheels are preset based on positions of the four wheels.

In a possible implementation, as shown in FIG. 10, the center of gravity calculation module 902 further includes: a determining subunit module 9024, configured to: when a sum of wheel loads on two wheels located on a first side is less than or equal to a first preset value, determine that center of gravity is located on a preset boundary line on a second side, where the first side and the second side are opposite sides of the four wheels of the forklift. A forklift according to a possible implementation of the present application includes: a forklift body for handling a material; a forklift overturning prevention apparatus 900 disposed on the forklift body, configured to perform the forklift overturning prevention method according to any one of the foregoing aspects; and a controller disposed on the forklift body and electrically connected to the forklift overturning prevention apparatus, configured to control the forklift body to perform a protection operation when a protection operation instruction sent by the forklift overturning prevention apparatus is received.

In this possible implementation, the forklift overturning prevention apparatus 900 detects a center of gravity of a forklift in real time by using a wheel load on a wheel. When the center of gravity reaches a preset boundary line, the forklift overturning prevention apparatus 900 sends a protection operation instruction to a controller, and the controller controls a forklift body to perform protection operations such as playing back a warning voice, prohibiting a forklift boom from extension, and lowering a forklift boom. The forklift is ensured to be in a stable state in all directions, thereby preventing the forklift from overturning in different directions, in particular preventing the forklift from more dangerous left and right lateral overturning, and effectively guaranteeing safety of goods and personnel.

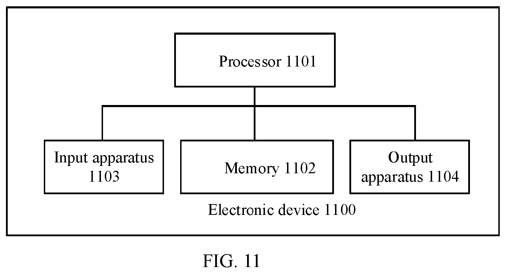

FIG. 11 is a schematic structural diagram of an electronic device according to a possible implementation of the present application. As shown in FIG. 11, an electronic device 1100 includes one or more processors 1110 and a memory 1120.

The processor 1110 may be a central processing unit (CPU) or a processing unit in another form that has a data handling capacity and/or instruction execution capacity, and may control another component in the electronic device 1100 to perform a desired function.

The memory 1120 may include one or more computer program products. The computer program products may include various forms of computer-readable storage media, for example, a volatile memory and/or a non-volatile memory. The volatile memory may include, for example, a random access memory (RAM) and/or a cache memory (cache). The non-volatile memory may include, for example, a read-only memory (ROM), a hard disk, a flash memory, and the like. One or more computer program instructions may be stored in the computer-readable storage medium. The processor 1110 may run the program instructions to implement the forklift overturning prevention methods in the foregoing possible implementations of the present application and/or another desired function. In an example, the electronic device 1100 may further include an input apparatus 1130 and an output apparatus 1140. These components are interconnected by using a bus system and/or another form of connection mechanism (not shown).

Certainly, for simplification, FIG. 11 shows merely some components related to the present application in the electronic device 1100. Components such as a bus and an input/output interface are omitted. In addition, according to a specific application situation, the electronic device 1100 may further include any other proper components.

In addition to the foregoing methods and devices, a possible implementation of the present application may alternatively be a computer program product. The computer program product includes computer program instructions. When the computer program instructions are run by a processor, the processor is enabled to perform the steps in the forklift overturning prevention methods in the possible implementations of the present application described in the forklift overturning prevention method in the specification.

The computer program product may use any combination of one or more programming languages to write a program code for performing possible implementations in the present application. The programming languages include an object oriented programming language, such as Java, C++, and conventional procedural programming language, such as the "C" language or a similar programming language. The program code may be entirely executed on a user's computing device, partially on a user's computing device, executed as an independent software package, partially executed on a user's computing device and partially executed on a remote computing device, or entirely executed on a remote computing device or a server.

In addition, a possible implementation of the present application may alternatively be a computer-readable storage medium. The computer-readable storage medium includes computer program instructions. When the computer program instructions are run by a processor, the processor is enabled to perform the steps in the forklift overturning prevention methods in the possible implementations of the present application described in the forklift overturning prevention method in the specification.

The computer-readable storage medium may employ any combination of one or more readable media. The readable medium may be a readable signal medium or a readable storage medium. The readable storage medium may include, but not limited to, electronic, magnetic, optical, electromagnetic, infrared, or semiconductor systems, apparatuses, or devices, or any combination thereof. A more specific example (a non-exhaustive list) of the readable storage medium includes an electrical connection based on one or more conducting wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage component, a magnetic storage component, or any proper combination of the foregoing content.

A basic principle of the present application is described with reference to the specific possible implementations. However, it should be noted that, the advantages, merits, effects, and the like mentioned in the present application are only examples but not limitations, and it cannot be considered that these advantages, merits, effects, and the like must be provided in the possible implementations of the present application.

The foregoing descriptions are merely preferable embodiments of the present application, but are not intended to limit the present application. Any modification, equivalent replacement, and the like made without departing from the scope of the independent method claim shall fall within the protection scope of the present application.

## Claims

1. A forklift overturning prevention method, **characterized by**, comprising:
acquiring (101) a wheel load on a wheel of a forklift;
obtaining (102) a center of gravity of the forklift based on wheel loads on all wheels of the forklift; and
sending (103) a protection operation instruction when the center of gravity reaches a preset boundary line,
**characterized in that**, the obtaining a center of gravity of the forklift based on wheel loads on all wheels of the forklift comprises:
acquiring (6023) wheel load information values for four wheels respectively based on wheel loads on the four wheels of the forklift; and obtaining (6024) the center of gravity of the forklift based on weights of the four wheels and the wheel load information values for the four wheels, wherein the weights of the four wheels are preset based on positions of the four wheels; or
when a sum of wheel loads on two wheels located on a first side is less than or equal to a first preset value, determining (7021) that the center of gravity is located on a preset boundary line on a second side, wherein the first side and the second side are opposite sides of the four wheels of the forklift.

2. The forklift overturning prevention method according to claim 1, wherein the acquiring a wheel load on a wheel of a forklift comprises:
acquiring strain data for an axle housing of a steering axle, wherein the steering axle is configured to connect a drive shaft of the forklift and the wheel of the forklift; and
converting the strain data into the wheel load, wherein the larger the strain data, the greater the wheel load.

3. The forklift overturning prevention method according to claim 1, wherein the acquiring a wheel load on a wheel of a forklift comprises:
acquiring an axial pressure on a steering knuckle shaft of the forklift; and
converting the axial pressure into the wheel load, wherein the greater the axial pressure, the greater the wheel load.

4. The forklift overturning prevention method according to any one of claims 1 to 3, wherein the preset boundary line comprises a combination of one or more of the following: a connection line of two front tyres, a connection line of two rear tyres, a connection line of two left tyres, and a connection line of two right tyres.

5. The forklift overturning prevention method according to claim 4, wherein the sending a protection operation instruction when the center of gravity reaches a preset boundary line comprises:
when the center of gravity reaches the connection line of the two front tyres, sending a protection operation instruction corresponding to forward overturning of the forklift.

6. The forklift overturning prevention method according to claim 4, wherein the sending a protection operation instruction when the center of gravity reaches a preset boundary line comprises:
when the center of gravity reaches the connection line of the two rear tyres, sending a protection operation instruction corresponding to backward overturning of the forklift.

7. The forklift overturning prevention method according to any one of claims 4 to 6, wherein the sending a protection operation instruction when the center of gravity reaches a preset boundary line comprises:
when the center of gravity reaches the connection line of the two left tyres, sending a protection operation instruction corresponding to leftward overturning of the forklift; or
when the center of gravity reaches the connection line of the two right tyres, sending a protection operation instruction corresponding to rightward overturning of the forklift.

8. The forklift overturning prevention method according to any one of claims 1 to 7, wherein the protection operation instruction comprises:
performing playback of a warning voice for forklift forward overturning, an operation of prohibiting a forklift boom from extension, and an operation of retracting a forklift boom; or
performing playback of a warning voice for forklift backward overturning, an operation of prohibiting a forklift boom from retraction, and an operation of extending a forklift boom; or
performing playback of a warning voice for forklift leftward overturning, a stopping operation of a forklift boom, and an increase in right counterweight torque; or
performing playback of a warning voice for forklift rightward overturning, a stopping operation of a forklift boom, and an increase in left counterweight torque.

9. A forklift, comprising:
a forklift body for handling a material;
a forklift overturning prevention apparatus disposed on the forklift body, configured to perform the forklift overturning prevention method according to any one of claims 1 to 8; and
a controller disposed on the forklift body and electrically connected to the forklift overturning prevention apparatus, configured to control the forklift body to perform a protection operation when a protection operation instruction sent by the forklift overturning prevention apparatus is received.

10. A computer-readable storage medium, wherein the computer-readable storage medium stores computer program instructions, and when the computer program instructions are run by a processor, the processor is configured to implement the forklift overturning prevention method according to any one of claims 1 to 8.

11. An electronic device, wherein the electronic device comprises:
a processor;
a memory, and
computer program instructions stored in the memory, wherein when the computer program instructions are run by the processor, the processor is configured to implement the forklift overturning prevention method according to any one of claims 1 to 8.

## Patentansprüche

1. Ein Gabelstapler-Antikippverfahren, **dadurch gekennzeichnet, dass** es Folgendes beinhaltet:
Erfassen (101) einer Radlast auf einem Rad eines Gabelstaplers;
Erhalten (102) eines Schwerpunkts des Gabelstaplers auf der Basis der Radlasten auf allen Rädern des Gabelstaplers; und
Senden (103) einer Schutzvorgangsanweisung, wenn der Schwerpunkt eine voreingestellte Grenzlinie erreicht,
**dadurch gekennzeichnet, dass**
das Erhalten eines Schwerpunkts des Gabelstaplers auf der Basis der Radlasten auf allen Rädern des Gabelstaplers Folgendes beinhaltet:
Erfassen (6023) von Radlastinformationswerten für vier Räder jeweils auf der Basis der Radlasten auf den vier Rädern des Gabelstaplers; und Erhalten (6024) des Schwerpunkts des Gabelstaplers auf der Basis der Gewichte der vier Räder und der Radlastinformationswerte für die vier Räder, wobei die Gewichte der vier Räder auf der Basis der Positionen der vier Räder voreingestellt sind; oder
wenn eine Summe der Radlasten auf zwei Rädern, die sich auf einer ersten Seite befinden, geringer als oder gleich einem ersten voreingestellten Wert ist, Bestimmen (7021), dass sich der Schwerpunkt auf einer voreingestellten Grenzlinie auf einer zweiten Seite befindet, wobei die erste Seite und die zweite Seite entgegengesetzte Seiten der vier Räder des Gabelstaplers sind.

2. Gabelstapler-Antikippverfahren gemäß Anspruch 1, wobei das Erfassen einer Radlast auf einem Rad eines Gabelstaplers Folgendes beinhaltet:
Erfassen von Beanspruchungsdaten für ein Achsgehäuse einer Lenkachse, wobei die Lenkachse konfiguriert ist, um eine Antriebswelle des Gabelstaplers und das Rad des Gabelstaplers zu verbinden; und
Umwandeln der Beanspruchungsdaten in die Radlast, wobei die Radlast umso größer ist, je größer die Beanspruchungsdaten sind.

3. Gabelstapler-Antikippverfahren gemäß Anspruch 1, wobei das Erfassen einer Radlast auf einem Rad eines Gabelstaplers Folgendes beinhaltet:
Erfassen eines Axialdrucks auf einer Achsschenkelwelle des Gabelstaplers; und
Umwandeln des Axialdrucks in die Radlast, wobei die Radlast umso größer ist, je größer der Axialdruck ist.

4. Gabelstapler-Antikippverfahren gemäß einem der Ansprüche 1 bis 3, wobei die voreingestellte Grenzlinie eine Kombination von einem oder mehreren der Folgenden beinhaltet: einer Verbindungslinie zweier Vorderreifen, einer Verbindungslinie zweier Hinterreifen, einer Verbindungslinie zweier linker Reifen und einer Verbindungslinie zweier rechter Reifen.

5. Gabelstapler-Antikippverfahren gemäß Anspruch 4, wobei das Senden einer Schutzvorgangsanweisung, wenn der Schwerpunkt eine voreingestellte Grenzlinie erreicht, Folgendes beinhaltet:
wenn der Schwerpunkt die Verbindungslinie der zwei Vorderreifen erreicht, Senden einer Schutzvorgangsanweisung, die einem Vorwärtskippen des Gabelstaplers entspricht.

6. Gabelstapler-Antikippverfahren gemäß Anspruch 4, wobei das Senden einer Schutzvorgangsanweisung, wenn der Schwerpunkt eine voreingestellte Grenzlinie erreicht, Folgendes beinhaltet:
wenn der Schwerpunkt die Verbindungslinie der zwei Hinterreifen erreicht, Senden einer Schutzvorgangsanweisung, die einem Rückwärtskippen des Gabelstaplers entspricht.

7. Gabelstapler-Antikippverfahren gemäß einem der Ansprüche 4 bis 6, wobei das Senden einer Schutzvorgangsanweisung, wenn der Schwerpunkt eine voreingestellte Grenzlinie erreicht, Folgendes beinhaltet:
wenn der Schwerpunkt die Verbindungslinie der zwei linken Reifen erreicht, Senden einer Schutzvorgangsanweisung, die einem Kippen des Gabelstaplers nach links entspricht; oder
wenn der Schwerpunkt die Verbindungslinie der zwei rechten Reifen erreicht, Senden einer Schutzvorgangsanweisung, die einem Kippen des Gabelstaplers nach rechts entspricht.

8. Gabelstapler-Antikippverfahren gemäß einem der Ansprüche 1 bis 7, wobei die Schutzvorgangsanweisung Folgendes beinhaltet:
Durchführen einer Wiedergabe einer warnenden Stimme hinsichtlich des Vorwärtskippens des Gabelstaplers, eines Vorgangs des Verhinderns des Ausstreckens eines Gabelstaplerauslegers und eines Vorgangs des Zurückziehens eines Gabelstaplerauslegers; oder
Durchführen einer Wiedergabe einer warnenden Stimme hinsichtlich des Rückwärtskippens des Gabelstaplers, eines Vorgangs des Verhinderns des Zurückziehens eines Gabelstaplerauslegers und eines Vorgangs des Ausstreckens eines Gabelstaplerauslegers; oder
Durchführen einer Wiedergabe einer warnenden Stimme hinsichtlich des Kippens des Gabelstaplers nach links, eines Stoppvorgangs eines Gabelstaplerauslegers und einer Erhöhung des rechten Gegengewichtdrehmoments; oder
Durchführen einer Wiedergabe einer warnenden Stimme hinsichtlich des Kippens des Gabelstaplers nach rechts, eines Stoppvorgangs eines Gabelstaplerauslegers und einer Erhöhung des linken Gegengewichtdrehmoments.

9. Ein Gabelstapler, der Folgendes beinhaltet:
einen Gabelstaplerkörper zum Handhaben eines Materials;
eine Gabelstapler-Antikippvorrichtung, die auf dem Gabelstaplerkörper angeordnet ist, konfiguriert, um das Gabelstapler-Antikippverfahren gemäß einem der Ansprüche 1 bis 8 durchzuführen; und
eine Steuereinheit, die auf dem Gabelstaplerkörper angeordnet und elektrisch mit der Gabelstapler-Antikippvorrichtung verbunden ist, konfiguriert, um den Gabelstaplerkörper so zu steuern, dass er einen Schutzvorgang durchführt, wenn eine von der Gabelstapler-Antikippvorrichtung gesendete Schutzvorgangsanweisung empfangen wird.

10. Ein computerlesbares Speicherungsmedium, wobei das computerlesbare Speicherungsmedium Computerprogrammanweisungen speichert und, wenn die Computerprogrammanweisungen von einem Prozessor ausgeführt werden, der Prozessor konfiguriert ist, um das Gabelstapler-Antikippverfahren gemäß einem der Ansprüche 1 bis 8 umzusetzen.

11. Ein elektronisches Gerät, wobei das elektronische Gerät Folgendes beinhaltet:
einen Prozessor;
einen Speicher und
in dem Speicher gespeicherte Computerprogrammanweisungen, wobei, wenn die Computerprogrammanweisungen von dem Prozessor ausgeführt werden, der Prozessor konfiguriert ist, um das Gabelstapler-Antikippverfahren gemäß einem der Ansprüche 1 bis 8 umzusetzen.

## Revendications

1. Un procédé anti-renversement de chariot élévateur à fourche, **caractérisé par** le fait de comprendre :
le fait d'acquérir (101) une charge de roue sur une roue d'un chariot élévateur à fourche ;
le fait d'obtenir (102) un centre de gravité du chariot élévateur à fourche sur la base des charges de roue sur l'ensemble des roues du chariot élévateur à fourche ; et
le fait d'envoyer (103) une instruction d'opération de protection lorsque le centre de gravité atteint une ligne limite prédéfinie,
**caractérisé en ce que**,
le fait d'obtenir un centre de gravité du chariot élévateur à fourche sur la base des charges de roue sur l'ensemble des roues du chariot élévateur à fourche comprend :
le fait d'acquérir (6023) des valeurs d'informations de charge de roue pour quatre roues respectivement sur la base des charges de roue sur les quatre roues du chariot élévateur à fourche ; et le fait d'obtenir (6024) le centre de gravité du chariot élévateur à fourche sur la base des poids des quatre roues et des valeurs d'information de charge de roue pour les quatre roues, où les poids des quatre roues sont prédéfinis sur la base des positions des quatre roues ; ou
lorsqu'une somme des charges de roue sur deux roues situées sur un premier côté est inférieure ou égale à une première valeur prédéfinie, le fait de déterminer (7021) que le centre de gravité est situé sur une ligne limite prédéfinie sur un deuxième côté, où le premier côté et le deuxième côté sont des côtés opposés des quatre roues du chariot élévateur à fourche.

2. Le procédé anti-renversement de chariot élévateur à fourche selon la revendication 1,
où le fait d'acquérir une charge de roue sur une roue d'un chariot élévateur à fourche comprend :
le fait d'acquérir des données de contrainte pour un carter d'essieu d'un essieu directeur, où l'essieu directeur est configuré pour raccorder un arbre de transmission du chariot élévateur à fourche et la roue du chariot élévateur à fourche ; et
le fait de convertir les données de contrainte en cette charge de roue, où plus les données de contrainte sont grandes, plus la charge de roue est importante.

3. Le procédé anti-renversement de chariot élévateur à fourche selon la revendication 1,
où le fait d'acquérir une charge de roue sur une roue d'un chariot élévateur à fourche comprend :
le fait d'acquérir une pression axiale sur un arbre de fusée de direction du chariot élévateur à fourche ; et
le fait de convertir la pression axiale en cette charge de roue, où plus la pression axiale est importante, plus la charge de roue est importante.

4. Le procédé anti-renversement de chariot élévateur à fourche selon n'importe laquelle des revendications 1 à 3, où la ligne limite prédéfinie comprend une combinaison d'une ligne ou plus parmi les suivantes : une ligne de jonction de deux pneus avant, une ligne de jonction de deux pneus arrière, une ligne de jonction de deux pneus gauches, et une ligne de jonction de deux pneus droits.

5. Le procédé anti-renversement de chariot élévateur à fourche selon la revendication 4,
où le fait d'envoyer une instruction d'opération de protection lorsque le centre de gravité atteint une ligne limite prédéfinie comprend :
lorsque le centre de gravité atteint la ligne de jonction des deux pneus avant, le fait d'envoyer une instruction d'opération de protection correspondant à un renversement vers l'avant du chariot élévateur à fourche.

6. Le procédé anti-renversement de chariot élévateur à fourche selon la revendication 4,
où le fait d'envoyer une instruction d'opération de protection lorsque le centre de gravité atteint une ligne limite prédéfinie comprend :
lorsque le centre de gravité atteint la ligne de jonction des deux pneus arrière, le fait d'envoyer une instruction d'opération de protection correspondant à un renversement vers l'arrière du chariot élévateur à fourche.

7. Le procédé anti-renversement de chariot élévateur à fourche selon n'importe laquelle des revendications 4 à 6, où le fait d'envoyer une instruction d'opération de protection lorsque le centre de gravité atteint une ligne limite prédéfinie comprend :
lorsque le centre de gravité atteint la ligne de jonction des deux pneus gauches, le fait d'envoyer une instruction d'opération de protection correspondant à un renversement vers la gauche du chariot élévateur à fourche ; ou
lorsque le centre de gravité atteint la ligne de jonction des deux pneus droits, le fait d'envoyer une instruction d'opération de protection correspondant à un renversement vers la droite du chariot élévateur à fourche.

8. Le procédé anti-renversement de chariot élévateur à fourche selon n'importe laquelle des revendications 1 à 7, où l'instruction d'opération de protection comprend :
le fait d'effectuer la diffusion d'un avertissement vocal prévenant d'un renversement vers l'avant du chariot élévateur à fourche, une opération d'interdiction d'extension d'une flèche de chariot élévateur à fourche, et une opération de rétraction d'une flèche de chariot élévateur à fourche ; ou
le fait d'effectuer la diffusion d'un avertissement vocal prévenant d'un renversement vers l'arrière du chariot élévateur à fourche, une opération d'interdiction de rétraction d'une flèche de chariot élévateur à fourche, et une opération d'extension d'une flèche de chariot élévateur à fourche ; ou
le fait d'effectuer la diffusion d'un avertissement vocal prévenant d'un renversement vers la gauche du chariot élévateur à fourche, une opération d'arrêt d'une flèche de chariot élévateur à fourche, et une augmentation de couple de contrepoids droit ; ou
le fait d'effectuer la diffusion d'un avertissement vocal prévenant d'un renversement vers la droite du chariot élévateur à fourche, une opération d'arrêt d'une flèche de chariot élévateur à fourche, et une augmentation de couple de contrepoids gauche.

9. Un chariot élévateur à fourche, comprenant :
un corps de chariot élévateur à fourche destiné à la manipulation d'un matériau ;
un appareil anti-renversement de chariot élévateur à fourche disposé sur le corps de chariot élévateur à fourche, configuré pour effectuer le procédé anti-renversement de chariot élévateur à fourche selon n'importe laquelle des revendications 1 à 8 ; et
un organe de contrôle disposé sur le corps de chariot élévateur à fourche et raccordé électriquement à l'appareil anti-renversement de chariot élévateur à fourche, configuré pour contrôler le corps de chariot élévateur à fourche afin qu'il effectue une opération de protection lorsqu'une instruction d'opération de protection envoyée par l'appareil anti-renversement de chariot élévateur à fourche est reçue.

10. Un support de stockage lisible par ordinateur, où le support de stockage lisible par ordinateur stocke des instructions de programme informatique, et lorsque les instructions de programme informatique sont exécutées par un processeur, le processeur est configuré pour implémenter le procédé anti-renversement de chariot élévateur à fourche selon n'importe laquelle des revendications 1 à 8.

11. Un dispositif électronique, où le dispositif électronique comprend :
un processeur ;
une mémoire, et
des instructions de programme informatique stockées dans la mémoire, où lorsque les instructions de programme informatique sont exécutées par le processeur, le processeur est configuré pour implémenter le procédé anti-renversement de chariot élévateur à fourche selon n'importe laquelle des revendications 1 à 8.
